# EUROPEAN PATENT APPLICATION

(11) **EP 1 530 142 A1**
(43) Date of publication of application: **11.05.2005**
(21) Application number: 04090410.4
(22) Date of filing: 26.10.2004
(51) Int. Cl.: G06F 17/60

(54) **Information collecting methods and systems**

(30) Priority: 27.10.2003 JP 2003365708; 26.12.2003 JP 2003434405
(71) Applicant: NISHITOMO CO. LTD., Watarai-Gun Mie Ken (JP)
(72) Inventor: Nishimura, Kinji c/o Kabushiki Kaisha Nishitomo, Watarai-gun Mie-ken (JP); Kato, Hiroyuki c/o Kabushiki Kaisha Nishitomo, Watarai-gun Mie-ken (JP)
(74) Representative: Baumgärtel, Gunnar, Dr.

(57) **Abstract**

A method of collecting information in a product distribution system is disclosed. In this system, users purchase products (20, 30; 200) from a manufacturer via distributors. The method includes the step of transmitting distributor identification information of the distributors, through which users purchased products (20, 30; 200), to an information collector (50) via terminal devices (10), such as cellular phones. The user transmits the distributor identification information. The method further includes the step of identifying the distributors based upon the distributor identification information transmitted by the users. The information collector (50) identifies the distributors.

## Description

This application claims priority to Japanese patent application serial numbers 2003-365708 and 2003-434405, the contents of which are incorporated herein by reference.

The present invention relates to methods systems for collecting information and in particular to methods for collecting information in a product distribution system where users purchase products, manufactured by manufacturers, via distributors. More specifically, the present invention relates to methods and systems for collecting information by the manufacturers with regard to the products based upon user registration information that may be obtained from users after the users have purchased the products.

Conventionally, manufacturers often offer cash incentives to distributors of their products in proportion to sales quantity or sales turnover. The cash incentives are provided so that the distributors may differentiate one manufacturer's products from the products of other manufacturers and increase the distributors' eagerness to promote and sell the one manufacturer's products.

Such cash incentives offered from manufacturers to the distributors of their products are well known and have been ordinarily incorporated in conventional practices. Consequently, identification of prior publications concerning this point is not believed to be necessary.

In general, the distributors purchase products from several different manufacturers. The profit margin of the distributors (i.e., the difference between the distributors' sales price and their purchase price) obtained by selling the products of one manufacturer is generally the same as the profit margin obtained by selling the products of any other manufacturer, as long as the equivalent products are also purchased from the other manufacturers. Therefore, even if the manufacturers have specifically requested that the distributors sell their products more aggressively than the products of the other manufacturers, it is hard to motivate the distributors to do so because there is no additional profit or recognition for compliance with this request.

It is accordingly an object of the present invention to teach methods and systems for collecting information, which may enable a manufacturer to identify which distributor sold the manufacturer's products to users, and therefore enable the manufacturers to motivate or reward the distributors who more aggressively sell the manufacturer's products

According to one aspect of the present teachings, methods of collecting information in a product distribution system are taught. In this distributing system, users purchase products from a manufacturer through individual distributors. The methods include the step of transmitting the distributor identification information of the distributors, through which the users purchased the products, to an information collector via terminal devices, such as cellular phones. The users transmit the distributor identification information. The methods further include the step of identifying a particular distributor based upon the distributor identification information transmitted by the users. The information collector determines the identification of the distributors.

As a result, the information collector, such as a management server of the manufacturer, can reliably identify the individual distributors of the manufacturer's products that have been purchased by the users.

In another aspect of the present teachings, the methods further include the step of storing the distributor identification information in the products prior to the distribution of the products from the manufacturer to the distributors. The distributor identification information is stored in the products by the manufacturer. The distributor identification information in the products distributed by one distributor is different from the distributor identification information in the products distributed by any other distributors.

For example, the products may be devices that can transmit information to the management server of the manufacturer and can receive information therefrom. Therefore, the distributor identification information stored in the products may be transmitted to the information collector via the purchased products. As a result, the information collector can reliably identify the distributor, through which the users have purchased the manufacturer's products, with respect to each individual product.

In another aspect of the present teachings, the terminal devices include input keyboards. The methods further include the step of inputting the distributor identification information into the terminal devices by means of the keyboards in order to transmit the distributor identification information to the information collector. The users perform the input operation of the distributor identification information into the terminal devices.

Therefore, even if the products do not store the distributor identification information, the users can transmit the distributor identification information to the information collector. As a result, in this aspect the information collector, such as the management server of the manufacturer, can also reliably identify the distributor, through which the users have purchased the manufacturer's products, with respect to each product.

In another aspect of the present teachings, each product includes a communication device and a data-collecting device. The data-collecting device may be a device such as a thermometer for measuring the body temperature of the user. The method further includes the step of storing serial information in the communication device of each product. The serial information of a communication device is distinguishable from the serial information of any other communication devices. The serial information is stored in the communication device by the manufacturer. For example, the serial information may be a plurality of alphanumeric characters. In addition, the method further includes the steps of collecting data by the data-collecting device. The next step is transmitting the data collected by the data-collecting device and the serial information of the communication device to a management server of the information collector via the communication device.

Therefore, the management server can distinguish one communication device from every other communication device based upon the serial information of each communication device.

In another aspect of the present teachings, the methods further include the steps of charging the accounts of the users by the information collector and counting the number of users who transmitted data.

Therefore, the data collector can count the number of the users who have transmitted data. For example, the information collector may charge the account of the users each time the users transmit data. The profit obtained by the charging of the various accounts may be disbursed in part to the distributors who actually distributed the products, through which the users have transmitted the data, in proportion to the number of products distributed by each respective distributor.

In another aspect of the present teachings, each product includes a communication device having an input device, such as a keyboard. The methods further include the steps of storing the distributor identification information within the communication device, inputting data into the communication device, and transmitting the inputted data from the communication device to a management server of the data collector.

Therefore, the users can transmit the data to the management server via the communication device after inputting the data by means of the input device.

In another aspect of the present teachings, systems are taught that are configured to perform the above various aspects of methods.

Additional objects, features, and advantages, of the present invention will be readily understood after reading the following detailed description together with the claims and the accompanying drawings, in which:
FIG. 1 is a schematic view showing a system for carrying out a first representative method of collecting information; and
FIGS. 2(A) and 2(B) are a front view and a block diagram, respectively, of a cellular phone used in the system shown in FIG. 1; and
FIGS. 2(C) and 2(D) are a front view and a block diagram, respectively, of a communication device used in the system shown in FIG. 1; and
FIGS. 2(E) and 2(F) are a front view and a block diagram, respectively, of a thermometer used in the system shown in FIG. 1; and
FIG.3 is an explanatory schematic view illustrating user identification information used in the first representative method; and
FIG. 4 is an explanatory schematic view illustrating a process for providing user registration; and
FIG. 5 is an explanatory schematic view showing information stored in the database of a management server of the system and showing results of searches of the database; and
FIG. 6 is a schematic view showing a system for carrying out a second representative method of collecting information; and
FIGS. 7(A) and 7(B) are a front view and a block diagram, respectively, of a communication device used in the system shown in FIG. 6; and
FIG. 8 is an explanatory schematic view illustrating user identification information used in the second representative method; and
FIG. 9 is an explanatory schematic view illustrating a process for transmitting distributor identification information of the second representative method.

Each of the additional features and teachings disclosed above and below may be utilized separately or in conjunction with other features and teachings to provide improved information collecting methods. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

### FIRST REPRESENTATIVE EMBODIMENT

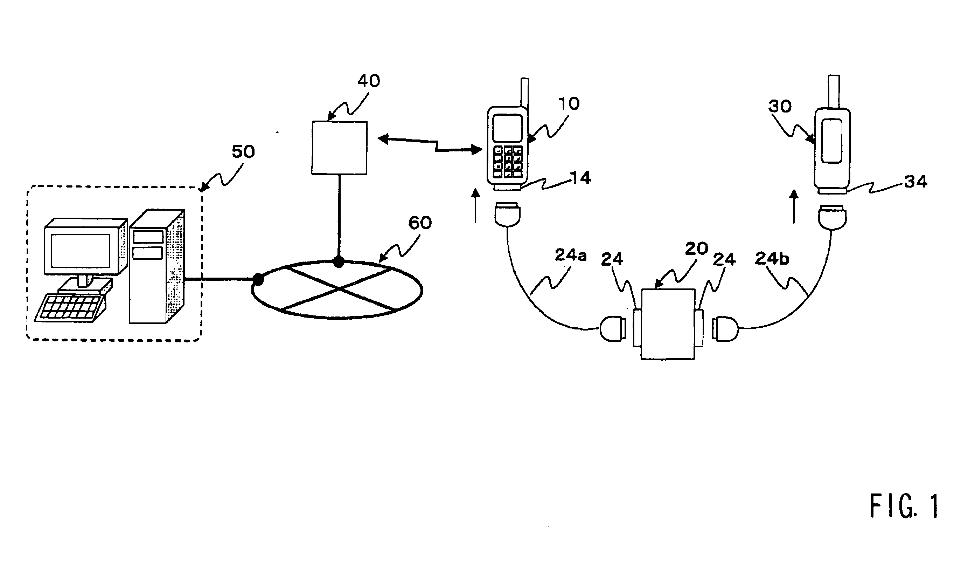

A first representative embodiment will now be described with reference to FIGS. 1 to FIG. 5. Referring to FIG. 1, a schematic diagram shows a representative method for collecting information with regard to distributors, through which a manufacturer distributed their products to users. The method for collecting information is based upon user registration information transmitted from the users to the manufacturer after the users have purchased the manufacturer's products from the distributors. The representative method will be described with the products represented as a communication device 20 and a data-collecting device 30, such as a thermometer. The products may be connected to each other via a communication cable 24b. In addition, a cellular phone 10 is incorporated as a terminal device and may be connected to the communication device 20 via a communication cable 24a.

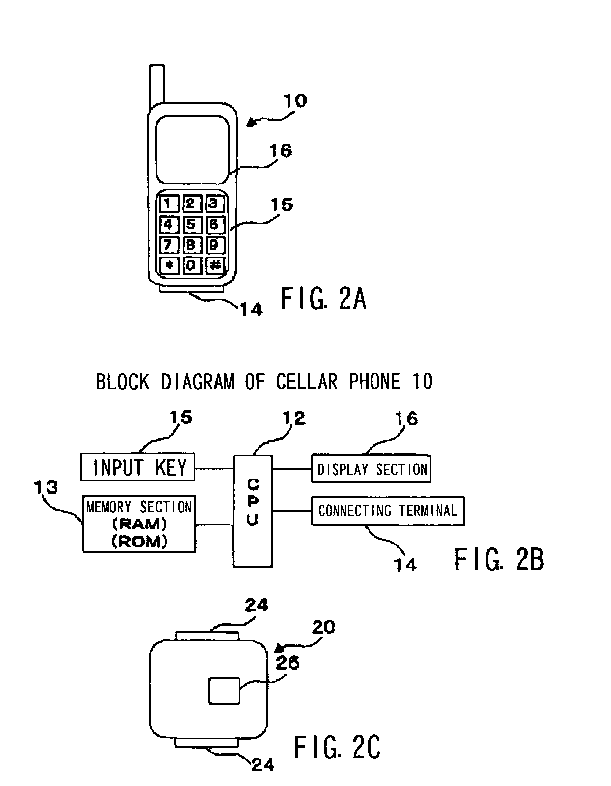

The construction of the cellular phone 10, the communication device 20, and the data-collecting device 30, will now be described with reference to FIGS. 2(A) to 2(F). The collector of information is embodied as the specific manufacturer of the communication device 20 and the data-collecting device 30.

### (CELLULAR PHONE 10)

The construction of the cellular phone 10 will be described with reference to FIGS. 2(A) and 2(B). The cellular phone 10 may include a connecting terminal 14, an input keyboard 15, and a display section 16. The connecting terminal 14 may be connected to the communication device 20 via the communication cable 24a. The block diagram in FIG. 2(B) shows the electrical configuration of the cellular phone 10. Consequently, the cellular phone 10 has CPU 12 electrically connected to the connecting terminal 14, the input keyboard 15, and the display section 16. A memory section 13, including RAM and ROM, is also electrically connected to the CPU 12.

The memory section 13 stores a control program that enables the CPU 12 to perform various functions. Some examples of the functions performed by the CPU 12 are accessing a desired party for communication via a relay device 40 and a communication line 60 (see FIG. 1), identifying signals and/or information transmitted from or received by the communication terminal 14, identifying the keys of the keyboards 15, and sending display signals to the display section 16. In this way, the cellular phone 10 may serve as a terminal device of the data-collecting device 30.

### (COMMUNICATION DEVICE 20)

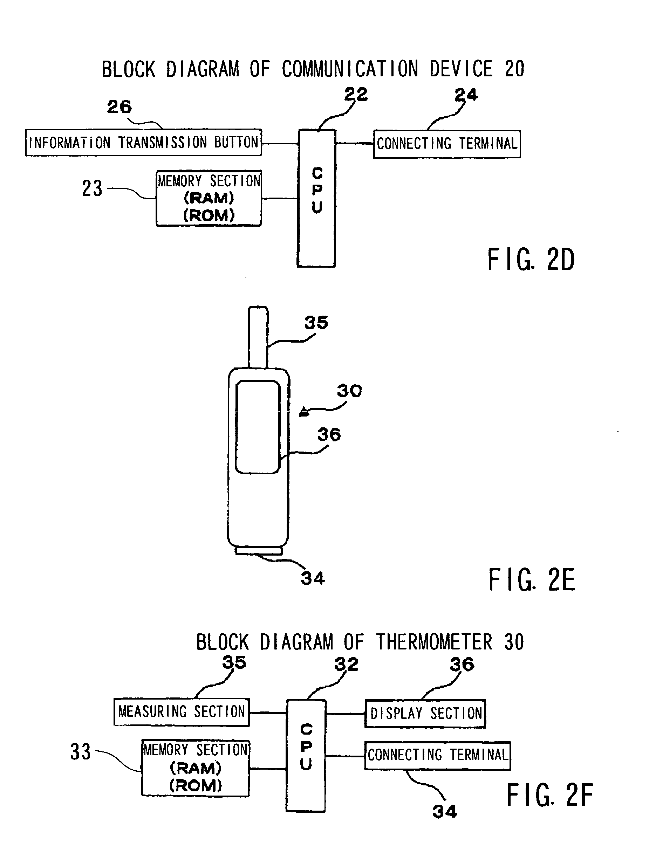

The construction of the communication device 20 will now be described with reference to FIGS. 2(C) and 2(D). The communication device 20 includes two connecting terminals 24 and an information transmission button 26. The connecting terminals 24 may be respectively connected to the cellular phone 10 and the data collection device 30 via the communication cables 24a and 24b. As previously described, in this representative embodiment the data collection device 30 is configured as a thermometer. Therefore, the data collection device 30 will hereinafter also be called "the thermometer 30." The block diagram in FIG. 2(D) shows the electrical configuration of the communication device 20. As shown in FIG. 2(D) the communication device 20 includes a CPU 22 electrically connected to the connecting terminals 24 and the information transmission button 26. A memory section 23, including RAM and ROM, is also connected to the CPU 22.

A control program is stored in the memory section 23 such that a measured value of a body temperature stored in the thermometer 30 is transmitted to a management server 50 via the relay device 40 and the communication line 60 when the user presses the information transmission button 26. The body temperature value may be transmitted only when the communication device 20 is respectively connected to the cellular phone 10 and the data collection device 30 via the communication cables 24a and 24b. The CPU 22 may also perform various functions. For example, the CPU 22 may identify signals or information transmitted to or received by the connecting terminals 24. The CPU 22 may also identify the operation of the information transmission button 26.

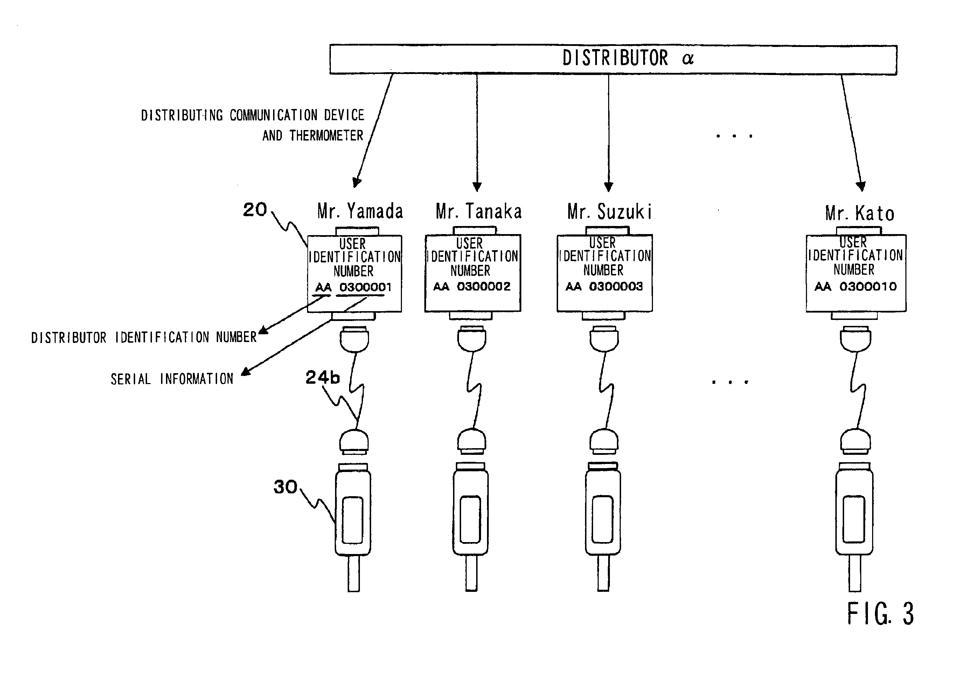

User identification information is stored in the memory section 23 in order to enable identification of distributors and users. As shown in FIG. 3, the user identification information includes distributor identification information and serial information. The distributor identification information may contain a plurality of alphanumeric characters. In the example shown in FIG. 3, the distributor identification information contains two alphabetic characters, such as "AA." Different combinations of alphabetic characters are allocated for each distributor in order for the distributors to be accurately identified by the identification information. The serial information may also contain a plurality of alphanumeric characters representing a manufacturer's production number. In the example shown in FIG. 3, the serial information contains seven numeric characters, such as "0300001 ", in which the first two digits (03) are allocated for the year of manufacture and the remaining five digits (00001) are allocated for the serial production number. In this way, serial information "0300001" to "0300010" are allocated to identify the year of manufacture (03) and the manufacturer's unique production number (00001 to 00010), identifying the specific product manufactured.

### (THERMOMETER 30)

The construction of the thermometer 30 will be described with reference to FIGS. 2(E) and 2(F). The thermometer 30 includes a connecting terminal 34, a measuring section 35 for measuring the temperature of a body, and a display section 36 for displaying the measured value of the body temperature. The connecting section 34 may be connected to the communication device 20 via the communication cable 24b. The block diagram in FIG. 2(F) shows the electrical configuration of the thermometer 30. As shown in FIG. 2(F), the thermometer 30 has a CPU 32 electrically connected to the connecting terminal 34, the measuring section 35, and the display device 36. A memory section 33, including RAM and ROM, is also connected to the CPU 32.

In order to measure the body temperature the user may apply the measuring section 35 to a part of his or her body and subsequently read the measured temperature value displayed on the display section 36. The measured temperature value is then stored in the memory section 33 along with other data indicating the date and time of the measurement. The measured temperature value stored in the memory section 33 can be transmitted to the management server 50 via the communication line 60 by connecting the cellular phone 10 and the thermometer 30 to the communication device 20. As will be explained later, the user must register his or her personal data as user information in the management server 50 before transmitting the measured temperature value. A control program is stored in the memory section 33 in order to enable the CPU 32 to perform various functions. For example, the CPU 32 may identify signals or information transmitted from or received by the connecting terminal 34. In addition, the CPU 32 may identify the information measured by the measuring section 35 and may instruct the display device 36 to display the measured value.

### (DISTRIBUTION OF COMMUNICATION DEVICE 20 TO USER)

As previously described, according to the representative method the communication device 20 may be distributed to the user together with the thermometer 30. In the embodiment shown in FIG. 3 the distributor α, identified by the distributor identification information "AA", distributes ten sets of the communication device 20 and the thermometer 30 to ten different users. Here, the characters "AA", indicating the distributor α, are included as the distributor identification information in the user identification information of the communication devices 20 distributed by the distributor α. In addition, the serial numerals "0300001" to "0300010", indicating the production number of the products, are included as the serial information in the identification information of the communication devices 20 when they are shipped from the manufacturer.

Therefore, if ten different users (only four are actually listed in the example shown in FIG. 3, Mr. Yamada, Mr. Tanaka, Mr. Suzuki, and Mr. Kato) have purchased the communication devices 20 from distributor α, the user identification information stored in their communication devices 20 would commonly include the characters "AA", for the distributor identification information, but would also include different serial numbers "0300001" to "0300010" for the serial information. Consequently, based upon the distributor identification information, the manufacturer can identify the distributor who distributed the communication devices 20. In addition, if after they have purchased the communication devices 20, the users register their personal data along with the serial information, the manufacturer will also be able to identify the individual user who purchased a specific communication device 20.

### (USER REGISTRATION)

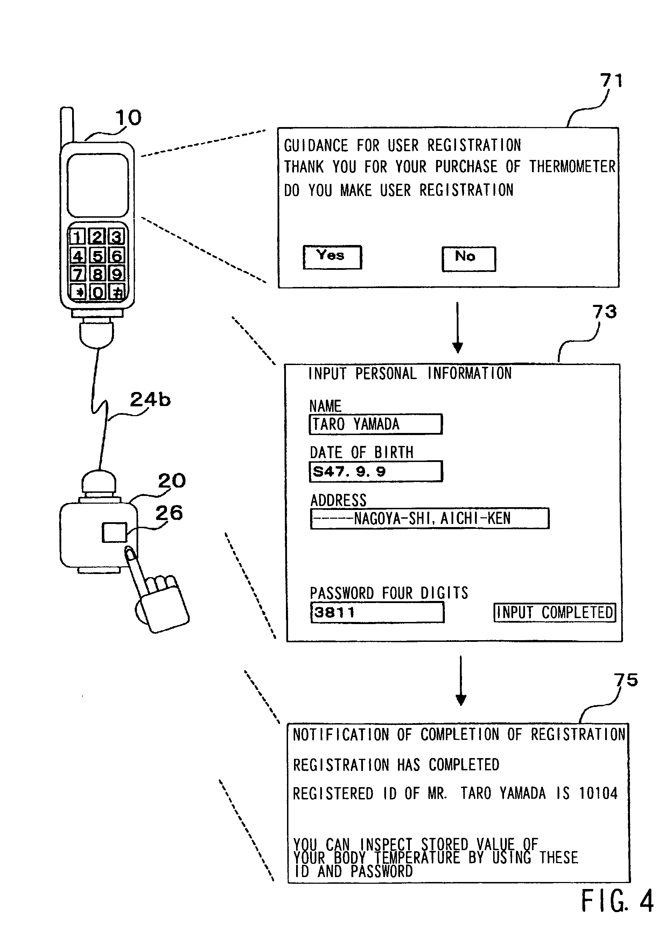

The user registration will now be described with reference to FIG. 4 by taking as an example the situation in which "Mr. Yamada" performs user registration. Mr. Yamada initially connects the communication device 20 to his cellular phone 10. He then pushes the information transmission button 26 of the communication device 20. This causes the software program stored in the memory section 23 of the communication device 20 to execute a series of instructions in order to have the management server 50 send a URL to the cellular phone 10 and allow the cellular phone 10 to access the management server 50. During the access by the cellular phone 10, the communication device 20 transmits the user identification information stored in memory section 23 to the management server 50. The communication device 20 also transmits the information with regard to the phone number read from the cellular phone 10.

The management server 50 next determines whether the received user identification information and the phone number of the cellular phone 10 have been previously stored in the database of the management server 50. If this determination is NO, the management server 50 decides that Mr. Yamada is a new user (a user who has not previously completed user registration) and subsequently downloads a user registration guide image 71 to the cellular phone 10 of Mr. Yamada. The user registration guide image 71 is displayed on the display device 16 of the cellular phone 10. In order to access user registration, Mr. Yamada may select "YES" by the operation of the input keyboard 15 of the cellular phone 10. As a result of this selection, a personal information input image 73 is downloaded and displayed on the display device 16.

Mr. Yamada may then input the information with regard to "NAME", "DATE OF BIRTH", "ADDRESS", and "PASSWORD", by operating the input keyboard 15. These categories of information are an example of the type of information inputted into this representative embodiment. The password may be four numeric digits selectively determined by Mr. Yamada. After inputting this information, Mr. Yamada may further operate the input keyboard 15 in order to select "INPUT COMPLETED". At this point, the inputted information indicating "NAME", "DATE OF BIRTH", "ADDRESS", and "PASSWORD", may be transmitted to the management server 50 and stored in a database. After storing the information in the database, the management server 50 assigns an ID to the information and downloads a registration completion image 75 to the cellular phone 10 of Mr. Yamada. The registration completion image 75 is displayed on the display device 16. In this representative embodiment, the assigned ID contains five numeric digits, such as "10104" shown in FIG. 4.

On the other hand, if the user identification information and the phone number received from the cellular phone 10 have been previously stored in the database of the management server 50, the management server 50 determines that Mr. Yamada has repeated the user registration operation. This determination can positively be made because the user identification number and the phone number are associated with each other in the database of the management server 50. If the management server 50 determines that Mr. Yamada has been previously registered in the database, the management server 50 downloads an image of a guide (not shown) that indicates that Mr. Yamada is a registered user. The guide is downloaded to the cellular phone 10 and displayed on the display device 16.

### (USER REGISTRATION INFORMATION STORED IN MANAGEMENT SERVER 50)

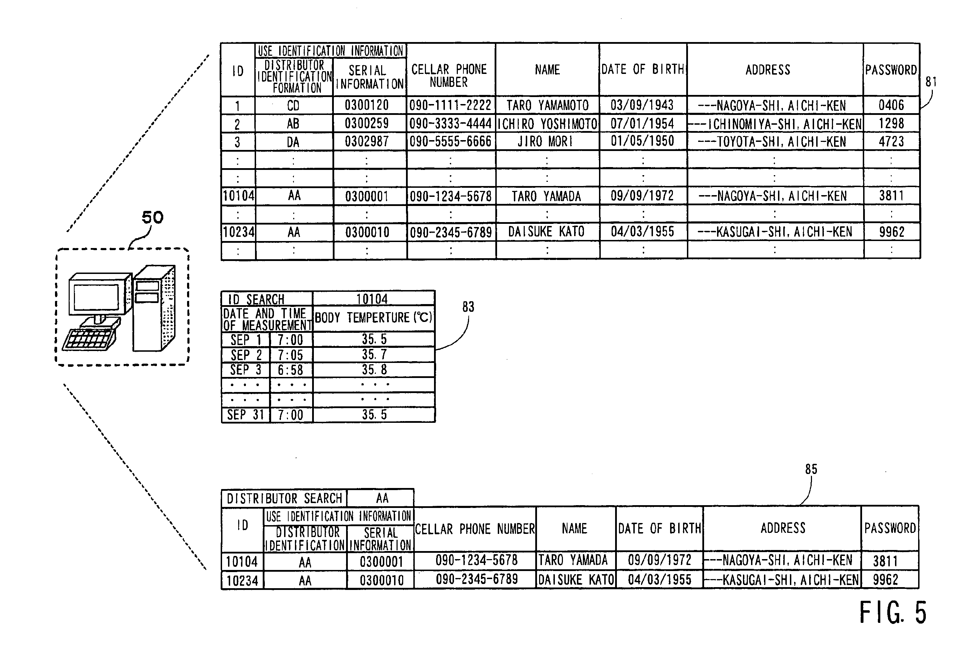

The management server 50 registers the inputted registration information in the database, for example, as user registration information 81 shown in FIG. 5. In the user registration information 81, the user identification information (including the distributor identification information and the serial information), the phone number, the name, the date of birth, the address, and the password, are recorded together with the ID that was allocated by the management server 50. In this representative embodiment, "10104" is allocated as the ID of Mr. Yamada. This allows the ID to be associated with the rest of the user registration information.

### (TRANSMISSION OF BODY TEMPERATURE VALUE)

The transmission of the body temperature measured by the thermometer 30 will now be described as a continuation of the user registration example. Mr. Yamada may measure his body temperature by applying the thermometer 30 to a suitable portion of his body every day when he wakes up. The thermometer 30 stores the measured body temperature along with the date and hour of measurement in the memory section 33. Of course, Mr. Yamada can read his body temperature from the displayed value on the display device 36. After each measurement or a series of measurements, Mr. Yamada may respectively connect the cellular phone 10 and the thermometer 30 to the communication device 20 via the communication cables 24a and 24b, as shown in FIG. 1. Mr. Yamada may then push the information transmission button 26 of the communication device 20. The measured body temperature along the date and hour of measurement is read from the memory section 33 of the thermometer 30 and is transmitted to the management server 50 via the relay device 40 and the communication line 60. The data is transmitted together with the user identification information and the phone number of Mr. Yamada, stored in the memory section 23 of the communication device 20.

Upon receipt of the transmission, the management server 50 determines whether the user identification information and the phone number are registered in a manner associated with the user registration information 81 stored in the management server 50. If the determination is YES, the management server 50 stores the measured body temperature and the date and hour of the measurement in a manner associated with the unique ID of Mr. Yamada. If the determination is NO, the management server 50 sends a notice to the cellular phone 10 that user registration has not yet been performed, and sends the user registration guide image 71 in order to recommend user registration. In this way, Mr. Yamada can transmit the measured body temperature to the management server 50 in order to store the information in the database of the management server 50.

The body temperature data, or preferably any biometric data, stored in the management server 50 can be accessed by the user himself or herself or another person, such as his or her attendant physician, who intends to examine the body temperature of the user. For example, if the user wishes to access the body temperature data, he or she may input the URL provided for data inspection into the cellular phone 10 in order to communicate with the management server 50. Upon communication of the cellular phone 10 with the management server 50, the management server 50 downloads an image, requesting the user to input the ID and the password, and the cellular phone 10 displays the downloaded image.

If the user is Mr. Yamada, he may respectively input "10104" and "3811" as the ID and the password. The inputted information will then be transmitted to the management server 50. The management server 50 determines whether or not the inputted ID and the password are registered and associated with each other in the user registration information 81. If the determination is YES, the management server 50 downloads an image 83 showing the relevant portion of the database to the cellular phone 10. The body temperature data of this example, i.e., the image 83, is displayed on the display section 16 of the cellular phone 10. More specifically, the image 83 shows the measured body temperature and the date and time of each measurement registered in the database and associated with the inputted ID.

The attendant physician of the user also can inspect the user's body temperature in the same manner as described above. Consequently, if the user reveals the URL for the access to the management server 50, the ID, and the password, to the attendant physician, the attendant physician may inspect the user's body temperature via a terminal device, such as a cellular phone and a personal computer, owned by the attendant physician.

In this way, the management server 50 may store the information with regard to the body temperatures of various users and each user can inspect their own stored body temperatures through access to the management server 50. Therefore, it is not necessary for the users to separately record the measured body temperatures or to report the measured body temperatures to his or her attendant physician. Consequently, the users can easily administrate and facilitate their own health care.

### (DISTRIBUTOR SEARCH)

It is possible to access the users of any particular distributor based upon the user registration information 81 stored in the management server 50. For example, if it is desired to examine the users who purchased the products, i.e., the communication devices 20, from a distributor α, a person may input or select the alphabetic characters "AA" in the corresponding space of "distributor search" in an image showing distributor searching information 85 stored in the database shown in FIG. 5. The user data corresponding to the distributor identification information "AA", i.e., users who purchased the products from distributor α, can then be extracted from the database. In the example of the distributor searching information 85 shown in FIG. 5, only two users having the IDs of "10104" and "10234" have been extracted. This means that only Mr. Yamada and Mr. Kato have performed user registration, although the distributor α sold the communication devices 20 to ten users, including Mr. Yamada, Mr. Tanaka, Mr. Suzuki, and Mr. Kato, among others.

If a charge account system is incorporated for the transmission of the body temperature data from the users to the management server 50, the product manufacturer may be able to regularly and stably obtain an additional income stream from the users even after the sale of the communication devices 20 and the thermometers 30. In addition, based upon the distributor searching information 85 obtained from the user registration information 81, the manufacturer can recognize the particular distributors through which the registered users have purchased the products. Therefore, in proportion to the number of the registered users for the respective distributors, the manufacturer can pay incentives to the distributors from the income generated by the charge account system for the transmission of the body temperature data. Conversely, if the manufacturer pays incentives to the distributors in proportion to the sales figures, incentives may be paid to the distributors having users who purchased the products but have not yet performed user registration. Therefore, improper distribution of the profit may be caused between the various distributors.

By applying this method of collecting information concerning the distributors, the manufacturer can reliably recognize the distributors through which the manufacturer's products have been sold. In addition, it is possible to fairly disburse to the distributors, the profit generated by the charge account system. More importantly, the distributors can obtain incentives from the manufacture in proportion to the number of users who have registered, even after the point of sale to the users. Due to a desire to obtain as much additional revenue as possible, the distributors may eagerly promote and distribute the products for which the manufacturer ensures incentives even after distribution. Consequently, the distributors will promote and distribute the manufacturer's products more than the products of other manufacturers.

### SECOND REPRESENTATIVE EMBODIMENT

A second representative embodiment will now be described with reference to FIGS. 4 through 9. Because the second representative embodiment is a modification of the first representative embodiment, like members are given the same reference numerals as in the first representative embodiment and a detailed description of these members will not be necessary. The second representative embodiment is different from the first representative embodiment in that the distributor identification information is not stored in the memory section 230 of a communication device 200 (corresponding to the memory section 23 of the communication device 20 of the first representative embodiment). Instead, the user may input the distributor identification information into the cellular phone 10 and may send the same to the management server 50.

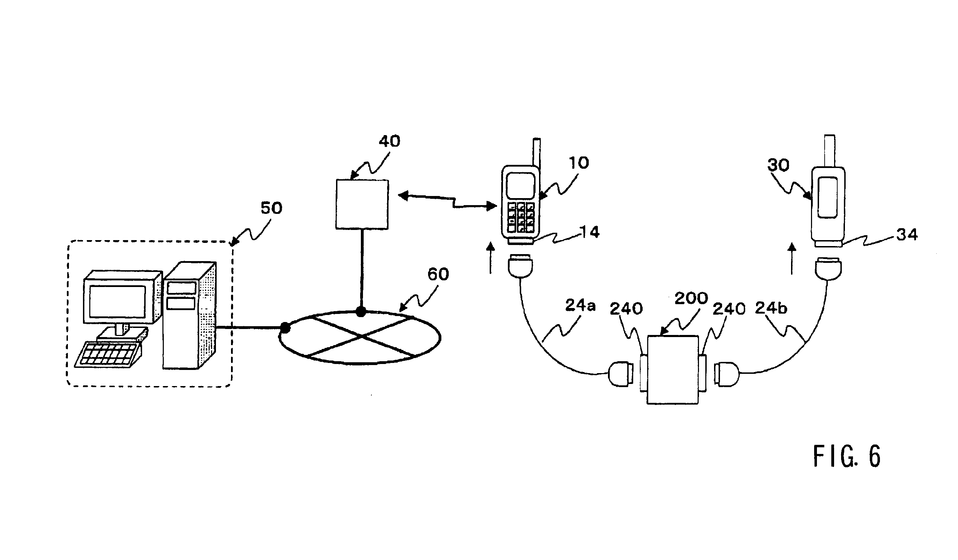

FIG. 6 is a schematic view showing a system for collecting information according to the second representative embodiment. The system shown in FIG. 6 is adapted to a method in which a manufacturer distributes products to users via distributors, the users perform user registration with the manufacturer after purchasing the products, and the manufacturer collects information with regard to the distributors from the user registration information.

In the same manner as in the first representative embodiment, an explanation will be made using the communication device 200 and the data-collecting device (thermometer) 30 as an example of the products. The communication device 200 and the thermometer 30 may be connected to each other via the communication cable 24b.

### (COMMUNICATION DEVICE 200)

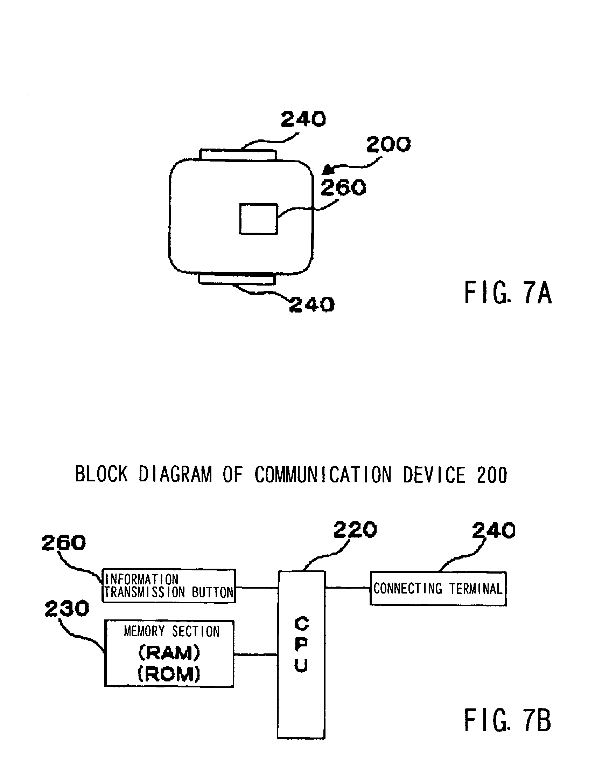

The construction of the communication device 200 will now be described with reference to FIGS. 7(A) and 7(B). As shown in FIG. 7(A), the communication device 200 includes communication terminals 240 for respectively connecting to the cellular phone 10 and the thermometer 30 via the communication cables 24a and 24b. The communication device 200 also includes an information transmission button 260. The block diagram in FIG. 7(B) shows the electrical configuration of the communication device 200. As shown in FIG. 7(B), the communication device 200 includes a CPU 220 connected to the connecting terminals 240 and the information transmission button 260. A memory section 230 is also connected to the CPU 220.

Similar to the first representative embodiment, a control program is stored in the memory section 230 such that a measured value of a body temperature stored in the thermometer 30 is transmitted to the management server 50. The measured value of a body temperature is transmitted via the relay device 40 and the communication line 60 when the user presses the information transmission button 260. The information is transmitted when the communication device 200 is respectively connected to the cellular phone 10 and the data collection device 30 via the communication cables 24a and 24b. The CPU 220 may perform a variety of functions. For example, the CPU 220 may identify signals or information transmitted to or received by the connecting terminals 240. The CPU 220 may also identify the operation of the information transmission button 260.

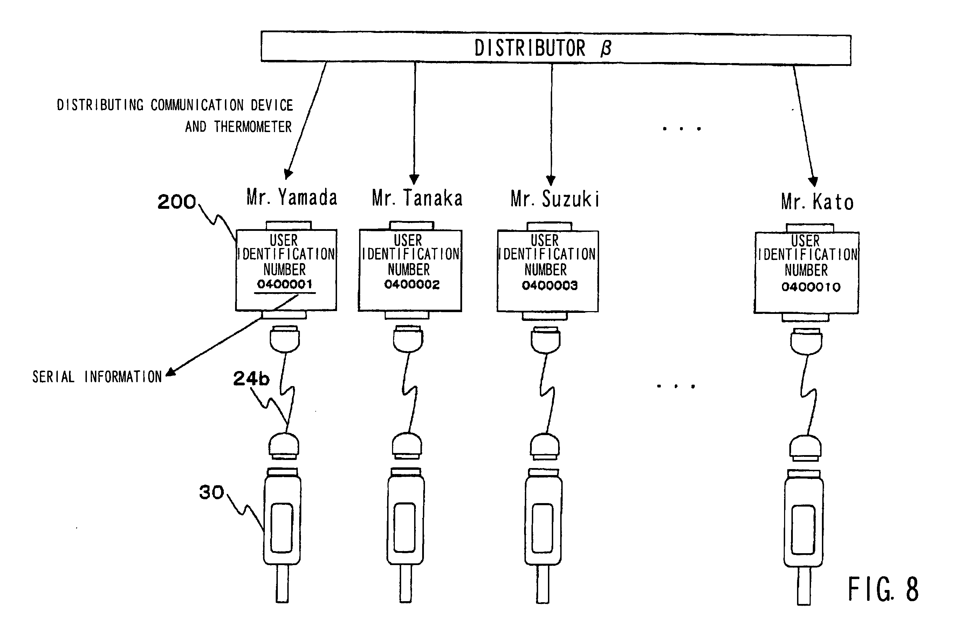

User identification information is previously stored in the memory section 230 in order to enable identification of users. As shown in FIG. 8, the user identification information includes serial information. The serial information may contain a plurality of alphanumeric characters representing a manufacturer's production number. In the example shown the serial information contains seven numeric digits, such as "0400001", in which the first two digits (04) are allocated for the year of manufacture and the remaining five digits (00001) are allocated for the serial production number. In this way, serial information "0400001" to "0400010" are configured to identify the year of manufacture (04) and the different manufacturer's production numbers (00001 to 00010).

### (DISTRIBUTION OF COMMUNICATION DEVICE 200 TO USER)

As described previously, according to the representative method the communication device 200 may be distributed to the user together with the thermometer 30. In the embodiment shown in FIG. 8, a distributor β distributes ten sets of the communication device 200 and the thermometer 30 to ten different users. The serial numerals "0400001" to "0400010", indicating the unique production numbers, are included as serial information in the identification information of the communication devices 200 when they are shipped from the manufacturer.

The description will be made using conditions similar to the first represent embodiment. The example conditions are that ten different users (only four users, Mr. Yamada, Mr. Tanaka, Mr. Suzuki, and Mr. Kato, are shown in FIG. 8) have purchased the communication devices 200 from the distributor β. In the same manner as described in connection with the first representative embodiment, Mr. Yamada may register the product via user registration by transmitting the user identification information stored in the communication device 200 to the management server 50. However, although the serial information is stored in the communication device 200, the distributor identification information is not stored in the communication device 200. Therefore, in order to enable the management server to identify the distributor through which Mr. Yamada purchased the products (communication device 200 and the thermometer 30), Mr. Yamada shall have to transmit the distributor identification information to the management server 50 as will be hereinafter described.

### (TRANSMISSION OF DISTRIBUTOR IDENTIFICATION INFORMATION)

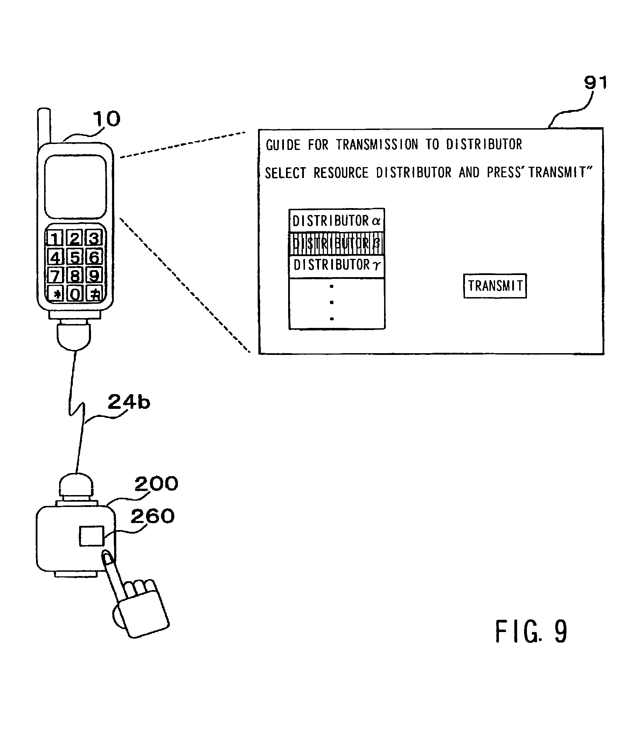

In the same manner as in the first representative embodiment, when Mr. Yamada has performed user registration with the management server 50, the management server 50 downloads an image 91 providing a guide for transmitting the distributor identification information. The image 91 is downloaded to the cellular phone 10 of Mr. Yamada and displayed on the display section 16 as shown in FIG. 9. Mr. Yamada then selects the distributor through which he has purchased the products from the list of distributors in the image 91, and subsequently transmits this information to the management server 50. The management server 50 had previously stored the distributor identification information in association with each of the distributors. For example, the management server 50 stored "BB" as the distributor identification information for the distributor β. The management server 50 can then identify the distributor identification information from the distributor selected by Mr. Yamada. In the same manner as in the first representative embodiment, the management server 50 can prepare and store the user registration information 81 based upon the user registration and the selection of the distributor by the user. The transmission of the measured body temperature data from the thermometer 30 and the search for the distributor made by the management server 50 may be performed in the same manner as in the first representative embodiment. Therefore, a detailed description of these steps will not be repeated.

According to the second representative embodiment, even if the distributor identification information is not stored in the communication device 200, the management server 50 can identify the distributor through which each user has purchased the products. The identification of the distributor is based upon the distributor identification information that is transmitted to the management server 50 by the user.

### (Possible Alternative Arrangements of First and Second Embodiments)

The present invention may not be limited to the above representative embodiments but may be modified in various ways. For example, although the data-collection device 30 was embodied as a thermometer 30 in the above representative embodiments, various measuring devices, such as but not limited to a hemomanometer, a blood sugar gauge, a bathroom scale, and an electrocardiograph, can be used as data collection devices.

In addition, although the communication device 20(200) and the data-collection device 30 have been described as separate devices that are connected to each other via the communication cable 24b in the above representative embodiments, the communication device 20(200) and the data-collection device 30 may be integrated as a single device.

Further, although the thermometer 30 and the communication device 20(200) have been described as products distributed by the manufacturer, only the communication device 20(200) may be distributed as a product. In such a case, the communication device may include a display device and an input device, so that the communication device may be used, for example, as a terminal device for a mail order service. The user may communicate with a predetermined server via the cellular phone 10 and may input the necessary information while he or she views an image displayed on the display device, in order to purchase the product from the predetermined server. In this representation, the communication device may store the distributor identification information in the same manner as in the first representative embodiment. The distributor identification information may be transmitted to the predetermined server each time that the user purchases a product via the communication device. Therefore, the manufacturer can pay incentives to the distributors in response to the sales figures or the sales amount of the communication devices distributed to the users through the respective distributors. As a result, it is possible to motivate the distributors to more aggressively sell the communication device.

Further, although the distributor identification information includes two alphabetic characters in the representative embodiments, the number of the alphabetic characters may not be limited to two as long as each distributor can be distinguished from the other distributors. In addition, the distributor identification information may include a numerical character(s) in addition to the alphabetic characters. Additionally, although the serial information includes seven numeric characters in the representative embodiments, the serial information may include any number of alphanumeric characters as long as each communication device 20 can be distinguished from the other communication devices 20.

Furthermore, although the user registration and the input operation of the distributor identification information have been made through the cellular phone 10 in the above representative embodiments, the cellular phone 10 may be replaced with a personal computer.

## Claims

1. A method of collecting information in a product distribution system in which users purchase products (20, 30; 200) from a manufacturer via distributors, the method comprising:
transmitting distributor identification information of the distributors, through which users purchased products (20, 30; 200), to an information collector (50) via terminal devices (10),
wherein the transmission of the distributor identification information is made by the users, and
identifying the distributors based upon the distributor identification information transmitted by the users,
wherein the identification of the distributors is made by the information collector (50).

2. The method as in claim 1, further comprising the step of;
storing the distributor identification information in the products (20; 200) prior to shipping the products (20; 200) from the manufacturer to the distributors,
wherein the distributor identification information is stored in the products (20; 200) by the manufacturer, and
wherein the distributor identification information uniquely identifies each distributor to which the products (20; 200) are distributed.

3. The method as in claim 1, wherein the terminal devices (10) comprise input keyboards (15), and the method further comprises the step of;
inputting the distributor identification information into the terminal devices (10) by means of the keyboards (15) in order to transmit the distributor identification information to the information collector (50),
wherein the input operation of the distributor identification information into the terminal devices (10) is performed by the users.

4. The method as in any one of the preceding claims, wherein each product comprises a communication device (20; 200) and at least one data-collecting device (30), and the method further comprises the steps of:
storing serial information in the communication device (20; 200) of each product, wherein the serial information uniquely identifies each communication device (20; 200), and
wherein the serial information is stored in the communication device (20; 200) by the manufacturer;
collecting data by the data-collecting device (30); and
transmitting the data collected by the data-collecting device (30) and the serial information of the communication device (20; 200) to a management server (50) of the information collector via the communication device (20; 200).

5. The method as in claim 4, further comprises the steps of;
charging an account of the users by the information collector (50), and
counting the number of users who transmitted the data.

6. The method as in any one of the preceding claims, wherein each product (200, 30) comprises a communication device (200) having an input device (10), and the method further comprises the steps of;
storing the distributor identification information in the communication device (200);
inputting data into the communication device (200), and
transmitting the inputted data from the communication device (200) to a management server (50) of the data collector.

7. A method comprising:
preparing a database of users of products (20, 30; 200) distributed to the users via one or more distributors,
wherein the database including an ID number, user identification information and personal information of each of the users, and
measuring biometric data of the users;
inputting the biometric data into the database through a communication device (20; 200), so that the biometric data is recorded in the database and associated with the ID number of each user,
extracting from the database information with regard to a specific distributor, and counting the frequency of input operations of the biometric based upon the extracted information.

8. The method as in claim 7, wherein a manufacturer of the products (20, 30; 200) manages the database, and the method further comprises;
calculating a management charge to be assessed to the users charge account based upon the frequency of the input operations of the biometric data, and
calculating incentives to be paid to the distributors based upon the management charges of the users associated with the specific distributor.

9. The method as in claim 7 or 8, wherein the database is stored in a management server (50) of the manufacturer, and
wherein the biometric data is measured by a measuring device (30) owned by each user, and
wherein each communication device (20; 200) is operable to transmit the biometric data to the management server (50) via a terminal device (10).

10. The method as in any one of the preceding claims, wherein the terminal device comprises a cellular phone (10).

11. The method as in any one of claims 7 to 10, wherein the communication device (20; 200) stores the user identification information inserted prior to distribution to each user, and the step of preparing the database further comprises;
inputting the personal information of each user into a terminal device (10) connected to the communication device (20; 200),
transmitting the inputted personal information together with the user identification information stored in the communication device (20; 200) via the terminal device (10), and
allocating the unique ID number to each user.

12. A data collecting system comprising:
means for preparing a database of users of communication devices (20; 200) manufactured by a manufacturer and distributed to the users via distributors,
wherein the database comprises an ID number, user identification information and personal information of a user, and
means (30) for measuring biometric data of a user;
means (10; 40) for inputting the biometric data into the database through the communication devices (20; 200), so that the biometric data is associated with the ID number of a user,
means for extracting the information from the database with regard to a specific distributor who distributed the communication devices (20; 200) to a group of users, and
means for counting the number of times of the input operation of biometric data through the communication devices (20; 200) by the group of users based upon the extracted information.

13. The system as in claim 12, wherein a manufacturer of the products (20, 30; 200) manages the database, and the system further comprises means (50) for calculating management charges charged to the users based upon the number of the input operation of the measured data, and calculating incentives paid to a distributor based upon the management charges relating to the communication devices (20; 200) distributed by that distributor.

14. The system as in claim 12 or 13, wherein the database is stored in a management server (50) of the manufacturer, and
wherein the biometric data is measured by a measuring device (30) owned by each user, and
wherein the communication device (20; 200) is operable to transmit the biometric data to the management server (50) via a terminal device (10).

15. The system as in any one of claims 12 to 14, wherein the terminal device comprises a cellular phone (10).

16. The system as in any one of claims 12 to 15, wherein the communication device (20) stores the user identification information has been previously stored prior to distribution to a user, and the means for preparing the database comprises;
means for inputting the personal information of a user into a terminal device (10) connected to the communication device (20; 200), transmitting the inputted personal information together with the user identification information stored in the communication device (20; 200) via the terminal device (10), and allocating the ID number to a user.
